(19) Europäisches Patentamt
European Patent Office
Office européen des brevets

(11) **EP 3 042 458 B1**

(12) **EUROPÄISCHE PATENTSCHRIFT**

(45) Veröffentlichungstag und Bekanntmachung des Hinweises auf die Patenterteilung:
**06.03.2019   Patentblatt 2019/10**

(51) Int Cl.:
*H04B 10/114* (2013.01)      *H04B 10/116* (2013.01)

(21) Anmeldenummer: **14759101.0**

(86) Internationale Anmeldenummer:
**PCT/EP2014/002361**

(22) Anmeldetag: **01.09.2014**

(87) Internationale Veröffentlichungsnummer:
**WO 2015/032479 (12.03.2015 Gazette 2015/10)**

(54) **VERFAHREN ZUR ÜBERTRAGUNG VON INFORMATION UND VORRICHTUNG ZUR DURCHFÜHRUNG DES VERFAHRENS**

METHOD FOR TRANSFERRING INFORMATION AND DEVICE FOR CARRYING OUT SAID METHOD

PROCÉDÉ DE TRANSMISSION D'INFORMATIONS ET DISPOSITIF D'EXÉCUTION DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2013   DE 102013014536**

(43) Veröffentlichungstag der Anmeldung:
**13.07.2016   Patentblatt 2016/28**

(73) Patentinhaber: **Sew-Eurodrive GmbH & Co. KG 76646 Bruchsal (DE)**

(72) Erfinder:
• HUA, Zhidong
  76137 Karlsruhe (DE)
• KEPPLER, Christoph Steffen
  76189 Karlsruhe (DE)
• SCHÄFER, Henning
  76698 Ubstadt-Weiher (DE)
• WANJEK, Andreas
  68753 Waghäusel (DE)

(56) Entgegenhaltungen:
EP-A1- 1 439 649        US-A1- 2011 128 384
US-A1- 2013 183 042     US-B1- 8 334 901

**Beschreibung**

Die Erfindung betrifft ein Verfahren zur Übertragung von Information und eine Vorrichtung zur Durchführung des Verfahrens.

Es ist allgemein bekannt, dass mittels einer Kamera Bilder aufgenommen werden, insbesondere zeitlich regelmäßig voneinander beabstandet, insbesondere mit einer Framerate.

Aus der US 8 334 901 B1 ist als nächstliegender Stand der Technik ein Verfahren für das Modulieren einer Lichtquelle in einem Licht-basierten Positionierungssystem bekannt, welches einen DC BIAS verwendet.

Aus der US 2011/0128384 A1 ist ein Verfahren für das Infrarot-Empfangen von Daten mit einer Kamera, welche zur Detektion von auf sichtbarem Licht basierenden Bildern vorgesehen ist.

Aus der US 2013/0183 042 A1 ist ein Verfahren zur ausdehnung de Kommunikationsbereichs in einem Kommunikationssystem, welches sichtbares Licht verwendet.

Aus der EP 1 439 649 A1 ist ein Datenkommunikationssystem bekannt, welches LEDs aufweist.

Der Erfindung liegt daher die Aufgabe zugrunde, eine Information in einfacher Weise berührungslos zu übertragen.

Erfindungsgemäß wird die Aufgabe bei dem Verfahren zur Übertragung von Information nach den in Anspruch 1 und bei der Vorrichtung zur Durchführung des Verfahrens nach den in Anspruch 7 angegebenen Merkmalen gelöst.

Wichtige Merkmale der Erfindung bei dem Verfahren zur Übertragung von Information sind, dass mittels einer Kamera mit einer Bildaufnahmefrequenz, insbesondere also Framerate, Bilder aufgenommen werden,

wobei im empfindlichen Bereich der Kamera ein ansteuerbares Leuchtmittel angeordnet ist,

wobei die Ansteuerfrequenz (f_PWM) des Leuchtmittels kleiner ist als die Bildaufnahmefrequenz f1,

Von Vorteil ist dabei, dass das Blinken des Leuchtmittels erkennbar ist, indem zwei zeitlich nacheinander aufgenommene Bilder verglichen werden. Dabei ist ein Vergleich aller Bildpunkte ausführbar oder ein Vergleich aller Zeilensummen und Spaltensummen.

Bei einer vorteilhaften Ausgestaltung beträgt die Ansteuerfrequenz f_PWM das m-fache der Bildaufnahmefrequenz f1,

insbesondere also $f\_PWM = m * f1$,

wobei der Faktor m zwischen 0,4 und 0,6 beträgt, insbesondere 0,5. Von Vorteil ist dabei, dass eine hohe Datenübertragungsrate erreichbar ist. Denn durch Vergleich zweier direkt aufeinander nachfolgend aufgenommenen Bilder ist ein Erkennen eines veränderten Leuchtzustandes eines Leuchtmittels in einfacher Weise erkennbar.

Bei einer vorteilhaften Ausgestaltung wird die zu übertragende Information als Pulsweitenmodulationsverhältnis des Ansteuersignals codiert. Von Vorteil ist dabei, dass eine einfache Codierung und somit einfache Datenübertragung ermöglicht ist.

Bei einer vorteilhaften Ausgestaltung bedeutet ein Pulsweitenmodulationsverhältnis von mehr als 80%, insbesondere also 100%, eine logische I, also Eins, und ein Verhältnis von weniger als 60%, insbesondere 50%, eine logische O, also Null oder umgekehrt. Von Vorteil ist dabei, dass eine einfache und sichere Datenübertragung ausführbar ist.

Bei einer vorteilhaften Ausgestaltung sind die Bildpunkte jedes aufgenommenen Bildes als zweidimensionale Matrix darstellbar, deren Elemente Zahlenwerte aufweisen zur Darstellung der Graustufe, Farbstufe oder Helligkeit des entsprechenden Bildpunktes,

wobei die jeweilige Summe der Zahlenwerte einer jeweiligen Zeile der Matrix gebildet wird, also alle zum Bild gehörigen Zeilensummen,

und wobei die jeweilige Summe der Zahlenwerte einer jeweiligen Spalte der Matrix gebildet wird, also alle zum Bild gehörigen Zeilensummen,

wobei die Differenzen der Zeilensummen und die Differenzen der Spaltensummen zweier zeitlich beabstandet aufgenommenen Bilder bestimmt wird und aus den nicht verschwindenden Differenzwerten auf den dem Leuchtmittel zugeordneten Bildpunkt geschlossen wird. Von Vorteil ist dabei, dass nur mit geringem Speichervolumen und geringer Rechenkapazität trotzdem große Bilder, beispielsweise mit mehr als 600 x 800 Pixeln, also Bildpunkten, sehr schnell auswertbar sind und die veränderlichen Zahlenwerte, also somit auch die entsprechenden Bildpunkte, bestimmbar sind.

Bei einer vorteilhaften Ausgestaltung wird aus der zeitlichen Veränderung der Zahlenwerte des dem Leuchtmittel zugeordneten Bildpunktes die Information decodiert,

insbesondere indem das Pulsweitenmodulationsverhältnis bestimmt wird und daraus die Information bestimmt wird. Von Vorteil ist dabei, dass in einfacher Weise Information erkennbar ist. Beispielsweise ist eine logische I dann erkennbar, wenn keine Veränderung des Leuchtzustandes des Leuchtmittels erkannt wird bei zwei zeitlich nacheinander aufgenommenen Bildern, und eine Logische O erkennbar ist, wenn eine Veränderung des Leuchtzustandes des Leuchtmittels erkannt wird bei zwei zeitlich nacheinander aufgenommenen Bildern.

Wichtige Merkmale der Vorrichtung zur Durchführung des Verfahrens sind, dass die Kamera eine Auswerteeinheit aufweist zur Decodierung der Information, insbesondere zur Bestimmung des zeitlichen Leuchtstärkeverlaufs des Leuchtmittels.

Von Vorteil ist dabei, dass eine schnelle Auswertung und Bestimmung der veränderlichen Leuchtmittel ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

In der Figur 1 ist ein erfindungsgemäßes System in Draufsicht schematisch skizziert.

In der Figur 2 ist ein Sender-Empfänger-betreffender Teil des Systems dargestellt, wobei der mittels der Kamera 3, insbesondere Lichtdetektor, detektierte Signalverlauf einer Auswerteeinheit 20 zugeführt werden.

In der Figur 3 sind Ansteuersignale der Leuchtmittel (1, 2) und das Abtastsignals des Detektors, also der Kamera, insbesondere Lichtdetektor, dargestellt.

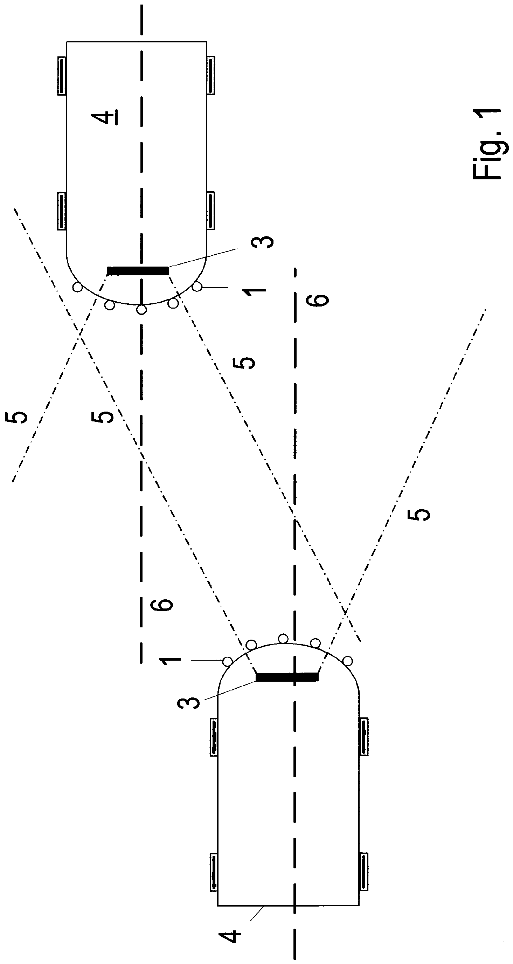

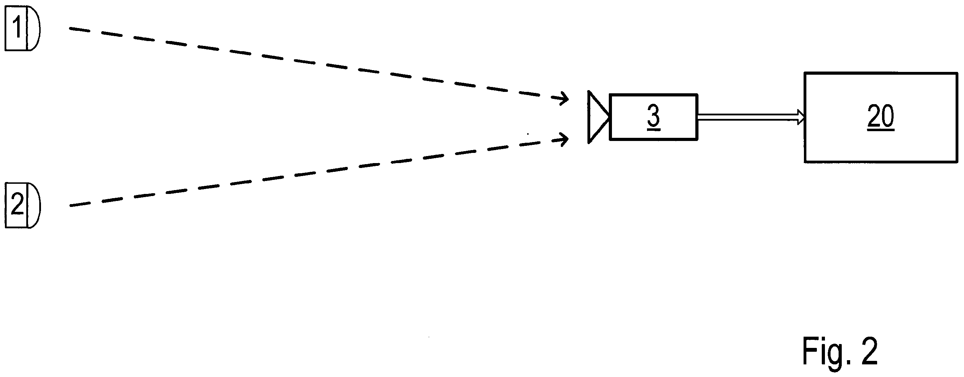

Wie in den Figuren 1 bis 3 gezeigt, weist das System eine Kamera 3, insbesondere also Lichtdetektor, auf, die auf einem ersten Mobilteil, insbesondere Fahrzeug 4, anordenbar ist.

Stationär oder auf einem anderen Mobilteil 4 ist ein erstes, mit einem Ansteuersignale S1 ansteuerbares Leuchtmittel 1 und/oder ein zweites, mit einem Ansteuersignale S1 ansteuerbares Leuchtmittel 2 angeordnet.

Zumindest eines der Leuchtmittel (1, 2) ist im empfindlichen Bereich 5 der Kamera 3 angeordnet ist. Das Leuchtmittel (1, 2) wird getaktet angesteuert. Dabei ist die Periodendauer des Ansteuersignals beziehungsweise die Pulsweitenmodulationsdauer größer als oder gleich wie die Framerate der Kamera. Vorzugsweise beträgt die Pulsweitenmodulationsdauer des Ansteuersignales S1 das Doppelte der zur Bildfrequenz f1 gehörigen Periodendauer

$$T1 = 1 / f1.$$

Die zu übertragende Information wird mittels des entsprechend codierten Pulsweitenmodulationsverhältnisses moduliert. Dabei bedeutet beispielsweise ein Verhältnis von mehr als 80%, insbesondere also 100%, eine logische I, also Eins, und ein Verhältnis von weniger als 60%, insbesondere 50%, eine logische O, also Null.

In Figur 1 ist die Fahrtrichtung 6 der beiden dort gezeigten Fahrzeuge 4, also Mobilteile, parallel und entgegengerichtet zueinander.

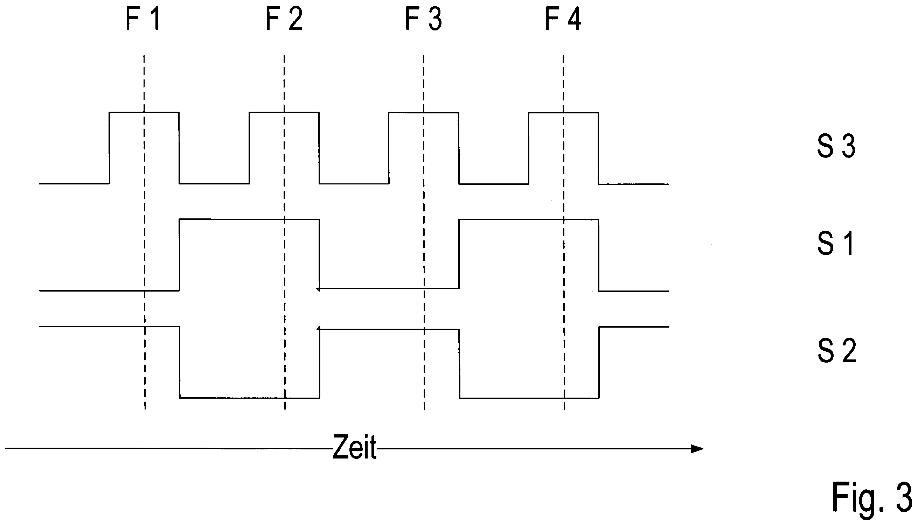

Die von der Kamera aufgenommenen Bilder werden einer Auswerteeinheit 20, insbesondere Bildverarbeitungseinheit, insbesondere FPGA, zugeführt. Dort werden zeitlich aufeinander nachfolgend aufgenommene Bilder ausgewertet bezüglich Veränderungen. Wie in Figur 3 gezeigt, erscheint das Leuchtmittel (1, 2) somit in einem ersten Bild als leuchtend und in einem nachfolgenden Bild als nicht leuchtend, weil die Ansteuerung S1 des Leuchtmittels 1 halb so schnell erfolgt wie die Framerate beträgt. Die Zeitdauer der Ansteuerung des Leuchtmittels ist nach Figur 3 mit einem Pulsweitenmodulationsverhältnis von 50 % ausgeführt. Dies bedeutet, dass die jeweilige Zeitdauer des Aktivierens des Leuchtmittels und des Deaktivierens des Leuchtmittels gleich lang andauert.

Ansteuerung S2 des Leuchtmittels 2 ist invertiert ausgeführt zu der Ansteuerung S1 des Leuchtmittels 1. Somit ist die Fehlerrate minimiert.

Die Framerate wird durch ein der Kamera 4 zugeführtes Abtastsignal S3 für Kamera, insbesondere Lichtdetektor, realisiert.

In der Figur 3 steuern die HIGH Pegel des Ansteuersignals die Aufnahme des ersten Frames F1, des zweiten Frames F2, des dritten Frames F3 und des vierten Frames F4 an.

Bei einem weiteren erfindungsgemäßen Ausführungsbeispiel ist die Erkennung des blinkenden Leuchtmittels derart ausgeführt, dass jedes aufgenommen Bild, also Frame, als (m x n) - Matrix dargestellt wird, wobei jedem Element der Matrix, also Bildpunkt und/oder Pixel, ein Zahlenwert zugeordnet ist, der die Helligkeit, Graustufe und/oder Farbe repräsentiert. Nach der Aufnahme des Bildes wird die jeweilige Zeilensumme gebildet, also die jede Summe der Zahlenwerte einer jeweiligen Zeile, und die jeweilige Spaltensumme gebildet, also jede Summe der Spaltenwerte einer jeweiligen Zeile. Danach wird die Differenz der jeweiligen Zeilensummen zweier Bilder bestimmt, insbesondere zweier zeitlich direkt aufeinander folgenden Bilder. Daraus ist der zum blinkenden, also veränderlichen Leuchtmittel, zugehörige Bildpunkt lokalisierbar

Unter Berücksichtigung weiterer Parameter, wie vorgegebene räumliche Ausdehnung des Leuchtmittels oder Beabstandung zweier Leuchtmittel, ist dann nicht nur der Winkel zwischen Blickrichtung der Kamera und der Richtung, unter welcher das Leuchtmittel erscheint, bestimmbar sondern auch die genaue Position.

**Bezugszeichenliste**

1 erstes Leuchtmittel
2 zweites Leuchtmittel
3 Kamera, insbesondere also Lichtdetektor
4 Fahrzeug, insbesondere also Mobilteil
5 empfindlicher Bereich, insbesondere Empfangsbereich
6 Fahrtrichtung
20 Auswerteeinheit, insbesondere Bildverarbeitungseinheit, insbesondere FPGA

F1 erstes Frame
F2 zweites Frame
F3 drittes Frame
F4 viertes Frame

S1 Signal, insbesondere Ansteuersignal, des ersten Leuchtmittels

S2 Signal, insbesondere Ansteuersignal, des zweiten Leuchtmittels

S3 Abtastsignal für Kamera, insbesondere Lichtdetektor

## Patentansprüche

1. Verfahren zur Übertragung von Information, wobei mittels einer Kamera (3) mit einer Bildaufnahmefrequenz, insbesondere also Framerate, Bilder aufgenommen werden, wobei im empfindlichen Bereich (5) der Kamera (3) ein ansteuerbares Leuchtmittel (1, 2) angeordnet ist, wobei die Ansteuerfrequenz (f_PWM) des Leuchtmittels (1, 2) kleiner ist als die Bildaufnahmefrequenz f1, **dadurch gekennzeichnet, dass** die Bildpunkte jedes aufgenommenen Bildes als zweidimensionale Matrix darstellbar sind, deren Elemente Zahlenwerte aufweisen zur Darstellung der Graustufe, Farbstufe oder Helligkeit des entsprechenden Bildpunktes, wobei die jeweilige Summe der Zahlenwerte einer jeweiligen Zeile der Matrix gebildet wird, also alle zum Bild gehörigen Zeilensummen, und wobei die jeweilige Summe der Zahlenwerte einer jeweiligen Spalte der Matrix gebildet wird, also alle zum Bild gehörigen Spaltensummen. wobei die Differenzen der Zeilensummen und die Differenzen der Spaltensummen zweier zeitlich beabstandet aufgenommenen Bilder bestimmt wird und aus den nicht verschwindenden Differenzwerten auf den dem Leuchtmittel (1, 2) zugeordneten Bildpunkt geschlossen wird.

2. Verfahren nach Anspruch 1, **dadurch gekennzeichnet, dass** die Ansteuerfrequenz f_PWM das m-fache der Bildaufnahmefrequenz f1 beträgt, insbesondere also f_PWM = m * f1, wobei der Faktor m zwischen 0,4 und 0,6 beträgt, insbesondere 0,5.

3. Verfahren nach mindestens einem der vorangegangenen Ansprüche, **dadurch gekennzeichnet, dass** die zu übertragende Information als Pulsweitenmodulationsverhältnis des Ansteuersignals codiert wird.

4. Verfahren nach mindestens einem der vorangegangenen Ansprüche, **dadurch gekennzeichnet, dass** ein Pulsweitenmodulationsverhältnis von mehr als 80%, insbesondere also 100%, eine logische I, also Eins, und ein Verhältnis von weniger als 60%, insbesondere 50%, eine logische O, also Null bedeutet oder umgekehrt..

5. Verfahren nach mindestens einem der vorangegangenen Ansprüche, **dadurch gekennzeichnet, dass** aus der zeitlichen Veränderung der Zahlenwerte des dem Leuchtmittel (1, 2) zugeordneten Bildpunktes die Information decodiert wird, insbesondere indem das Pulsweitenmodulationsverhältnis bestimmt wird und daraus die Information bestimmt wird.

6. Vorrichtung eingerichtet zur Durchführung des Verfahrens nach mindestens einem der vorangegangenen Ansprüche, **dadurch gekennzeichnet, dass** die Kamera (3) eine Auswerteeinheit (20) aufweist zur Decodierung der Information, insbesondere zur Bestimmung des zeitlichen Leuchtstärkeverlaufs des Leuchtmittels (1, 2).

## Claims

1. Method for transmitting information, wherein images are captured by means of a camera (3) with an image capture frequency, that is to say in particular a frame rate, wherein an actuatable lighting means (1, 2) is arranged in the sensitive range (5) of the camera (3), wherein the actuation frequency (f_PWM) of the lighting means (1, 2) is lower than the image capture frequency f1, **characterized in that** the pixels of each captured image can be represented as a two-dimensional matrix, the elements of which have numerical values for representing the grey level, colour level or brightness of the corresponding pixel, wherein the respective sum of the numerical values of a respective row of the matrix is formed, that is to say all the row sums belonging to the image, and wherein the respective sum of the numerical values of a respective column of the matrix is formed, that is to say all the column sums belonging to the image, wherein the differences of the row sums and the differences of the column sums of two images captured in a manner spaced over time is determined, and the pixel associated with the lighting means (1, 2) is deduced from the non-vanishing difference values.

2. Method according to claim 1, **characterized in that** the actuation frequency f_PWM is m times the image capture frequency f1, that is to say in particular f_PWM = m*f1,

wherein the factor m is between 0.4 and 0.6, in particular 0.5.

3. Method according to at least one of the preceding claims, **characterized in that** the information to be transmitted is encoded as a pulse width modulation ratio of the actuation signal.

4. Method according to at least one of the preceding claims, **characterized in that** a pulse width modulation ratio of more than 80%, that is to say in particular 100%, means a logic I, that is to say one, and a ratio of less than 60%, in particular 50%, means a logic O, that is to say zero, or vice versa.

5. Method according to at least one of the preceding claims, **characterized in that** the information is decoded from the change over time of the numerical values of the pixel assigned to the lighting means (1, 2), in particular whereby the pulse width modulation ratio is determined and the information is determined therefrom.

6. Device configured for carrying out the method according to at least one of the preceding claims, **characterized in that** the camera (3) has an evaluation unit (20) for decoding the information, in particular for determining the curve over time of the light intensity of the lighting means (1, 2).


**Revendications**

1. Procédé de transmission d'une information, dans lequel des images sont capturées au moyen d'une caméra (3) à une fréquence de capture d'images, en particulier donc une fréquence d'images, dans lequel un moyen d'éclairage commandable (1, 2) est disposé dans la zone sensible (5) de la caméra (3), dans lequel la fréquence de commande (f_PWM) du moyen d'éclairage (1, 2) est inférieure à la fréquence de capture d'images f1, **caractérisé en ce que** les pixels de chaque image capturée peuvent être représentés sous la forme d'une matrice bidimensionnelle dont les éléments présentent des valeurs numériques pour représenter le niveau de gris, le niveau de couleur ou la luminosité du pixel correspondant, dans lequel on forme la somme respective des valeurs numériques d'une ligne respective de la matrice, donc toutes les sommes de lignes appartenant à l'image, et dans lequel on forme la somme respective des valeurs numériques d'une colonne respective de la matrice, donc toutes les sommes de colonnes appartenant à l'image, dans lequel on détermine les différences des sommes de lignes et les différences des sommes de colonnes de deux images capturées de manière espacée dans le temps et on déduit le pixel associé au moyen d'éclairage (1, 2) des valeurs de différence non infinitésimales.

2. Procédé selon la revendication 1, **caractérisé en ce que** la fréquence de commande f_PWM est égale à m fois la fréquence de capture d'images f1, en particulier donc f_PWM = m * f1, le facteur m étant compris entre 0,4 et 0,6, en particulier égal à 0,5.

3. Procédé selon au moins l'une des revendications précédentes, **caractérisé en ce que** l'information à transmettre est codée sous la forme d'un rapport de modulation de largeur d'impulsion du signal de commande.

4. Procédé selon au moins l'une des revendications précédentes, **caractérisé en ce qu'**un rapport de modulation de largeur d'impulsion supérieur à 80%, en particulier donc de 100 %, signifie un 1 logique, donc un, et un rapport inférieur à 60 %, en particulier de 50 %, signifie un 0 logique, donc zéro, ou vice versa.

5. Procédé selon au moins l'une des revendications précédentes, **caractérisé en ce que** l'information est décodée à partir de la variation dans le temps des valeurs numériques du pixel associé au moyen d'éclairage (1, 2), en particulier en déterminant le rapport de modulation de largeur d'impulsion et en déterminant l'information à partir de celui-ci.

6. Dispositif conçu pour mettre en oeuvre le procédé selon au moins l'une des revendications précédentes, **caractérisé en ce que** la caméra (3) présente une unité d'évaluation (20) pour décoder l'information, en particulier pour déterminer la variation dans le temps de l'intensité lumineuse du moyen d'éclairage (1, 2).

Fig. 1

Fig. 2

EP 3 042 458 B1

Fig. 3

**IN DER BESCHREIBUNG AUFGEFÜHRTE DOKUMENTE**

**In der Beschreibung aufgeführte Patentdokumente**

- US 8334901 B1
- US 20110128384 A1
- US 20130183042 A1
- EP 1439649 A1